# FASCICULE DE BREVET EUROPEEN

(11) **EP 3 671 369 B1**
(45) Date de publication et mention de la délivrance du brevet: **17.08.2022**
(21) Numéro de dépôt: 18213554.1
(22) Date de dépôt: 18.12.2018
(51) Int. Cl.: G04D 3/02, G01B 7/31, G04D 7/04, G04B 31/02

(54) **DISPOSITIF DE CONTROLE GEOMETRIQUE POUR MOBILES D'HORLOGERIE**
VORRICHTUNG ZUR GEOMETRISCHEN KONTROLLE FÜR UHRENRÄDER EINER UHR
DEVICE FOR GEOMETRIC CONTROL FOR TIMEPIECE WHEELS

(43) Date de publication de la demande: 24.06.2020
(73) Titulaire: ETA SA Manufacture Horlogère Suisse, 2540 Grenchen (CH)
(72) Inventeur: GANGUIN, Fabrice, 2740 Moutier (CH); WELZ, Erich, 2830 Courrendlin (CH)
(74) Mandataire: ICB SA

(56) Documents cités:
- EP-A1- 2 887 007
- EP-A1- 3 081 997
- CH-A- 343 742

## Description

### Domaine de l'invention

L'invention concerne un dispositif de contrôle géométrique pour mobiles d'horlogerie, comportant une poupée portant une première broche folle ou motorisée et définissant un premier axe de rotation et une contre-poupée portant une deuxième broche folle ou motorisée définissant un deuxième axe de rotation, agencées sur une semelle commune par rapport à laquelle au moins ladite poupée et/ou ladite contre-poupée est mobile selon au moins un degré de liberté en translation le long de moyens de guidage d'alignement selon une direction commune parallèle audit premier axe de rotation, et des moyens agencés pour assurer ou régler la coaxialité dudit deuxième axe de rotation par rapport audit premier axe de rotation.

L'invention concerne le domaine de l'outillage de métrologie, et plus particulièrement le domaine de l'outillage de contrôle en production, pour le cas particulier du contrôle dimensionnel et géométrique de mobiles horlogers.

### Arrière-plan de l'invention

Le contrôle dimensionnel et géométrique de composants horlogers est difficile à réaliser, en raison des très petites dimensions des composants, et des tolérances extrêmement faibles, souvent d'amplitude bien inférieure à la résolution des moyens de mesure polyvalents usuel, tels centres de mesure tridimensionnels ou similaire. De ce fait les contrôles en cours de production nécessitent souvent un prélèvement et un passage en salle de métrologie ou en laboratoire, pour une vérification longue et coûteuse, ou bien recourent à l'emploi d'outillages dédiés, très peu polyvalents, et très coûteux.

La préhension des mobiles est particulièrement délicate, car, du fait de leur faible diamètre, les parties arbrées ne pouvant pas comporter, comme en mécanique générale, des centres intérieurs pour des contrôles sur banc entre pointes, et les portées externes sont souvent trop courtes pour procurer un bon guidage en rotation. De ce fait le contrôle de tels mobiles est souvent effectué sur des vés, ce qui restreint le contrôle à une position horizontale dans l'espace, qui n'est en général pas représentative des positions de service ; de plus le réglage en hauteur des vés est souvent délicat à bien réaliser. Déjà difficile à bien réaliser en statique, le contrôle se complique encore quand il est nécessaire de mettre en rotation le mobile pour un contrôle dynamique, ou, tout simplement, pour mesurer un voile, un mal-plat ou autre. L'entraînement par courant d'air n'est pas adapté à toutes les géométries de mobiles, et les mécanismes connus d'entraînement par archet et fil en appui sont d'utilisation malcommode, en raison des problèmes de non-reproductibilité de la tension du fil, de son inclinaison, de son vieillissement avec détende de sa torsade, de son usure allant jusqu'à la rupture, de la pollution que le fil transporte, pour ne citer que les inconvénients principaux.

Les matériels connus ne sont pas polyvalents, et sont donc peu adaptés à un contexte de production variée avec la fabrication de nombreuses références.

Le double problème du maintien et de l'entraînement en rotation de mobiles d'horlogerie de longueur inférieure à 4 millimètres, avec des parties arbrées de diamètre voisin du dixième de millimètre, reste donc irrésolu, et leur contrôle reste une opération difficile et coûteuse.

Le document EP2887007 au nom de MONTRES BREGUET décrit un dispositif de posage pour le contrôle de composants horlogers de type entre pointes, avec un embout concentrateur de champ magnétique et/ou électrique, agencé pour le maintien d'une extrémité d'un organe à contrôler en exerçant sur ce dernier une force magnétostatique et/ou électrostatique.

Le document EP3081997 au nom de MONTRES BREGUET décrit un dispositif antichoc magnétique pour un arbre d'horlogerie, en particulier pour un arbre maintenu axialement par des paliers magnétiques.

Le document CH343742 au nom de FONTAINEMELON HORLOGERIE décrit une machine-outil de fabrication de composants horlogers, notamment entre-pointes, avec une pince de serrage axial du composant à usiner, et une poupée et une contre-poupée, laquelle comporte un ressort de rappel pour repousser la broche qu'elle porte vers la zone de travail.

### Résumé de l'invention

L'invention se propose d'apporter une solution industrielle à ce double problème, et de définir un mécanisme facile à utiliser, interchangeable et adapté à un changement de production en rendant facile le contrôle d'un nouveau produit, tout en restant économique, tant au niveau de l'investissement matériel que de la durée du contrôle, et assurant la justesse requise, et la reproductibilité des mesures.

A cet effet, l'invention concerne un dispositif de contrôle géométrique pour mobiles d'horlogerie selon la revendication 1.

### Description sommaire des dessins

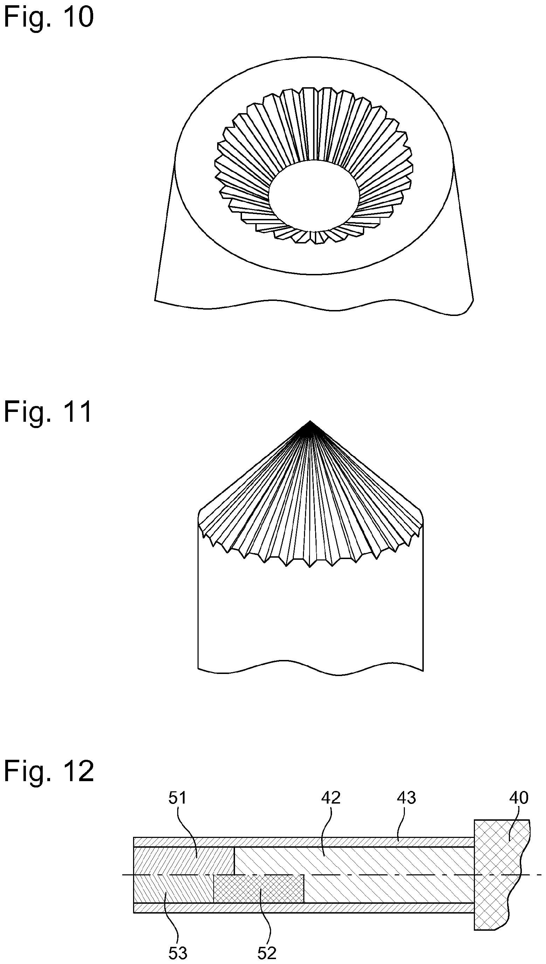

D'autres caractéristiques et avantages de l'invention apparaîtront à la lecture de la description détaillée qui va suivre, en référence aux dessins annexés, où :

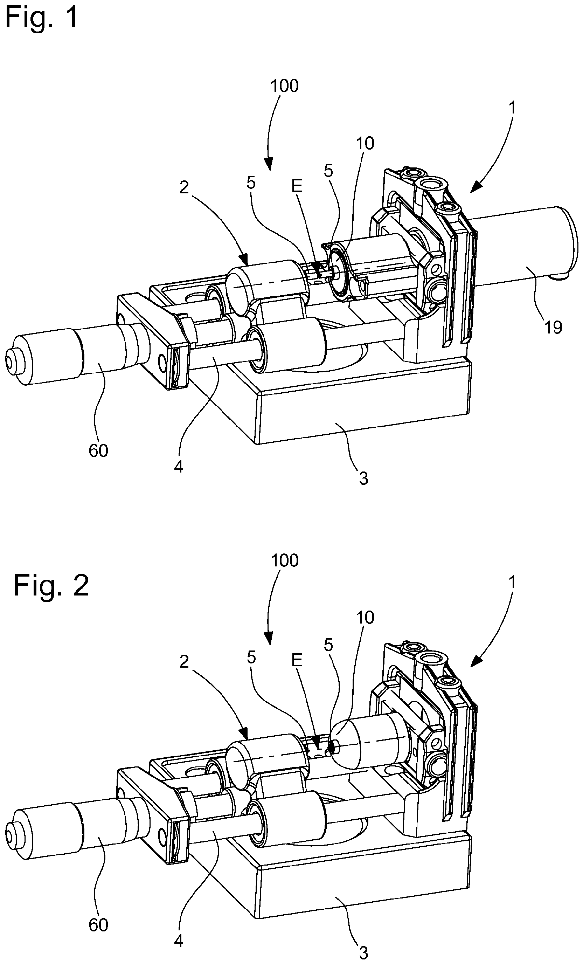

- la figure 1 représente, de façon schématisée, et en perspective, un dispositif selon l'invention, dans une variante compacte, qui constitue un posage standard, ici représenté dans une réalisation non limitative avec une poupée montée fixe sur une semelle, et porteuse d'une broche dans laquelle est inséré un centreur amovible interchangeable ; sur la même semelle, un guidage à colonnes guide une contre-poupée dans l'alignement de la poupée, elles délimitent ensemble un espace d'entrefer, dans lequel sera inséré un mobile à contrôler ; cette contre-poupée est équipée de la même façon que la poupée, avec une broche dans laquelle est inséré un autre centreur amovible interchangeable ; un micromètre permet un réglage fin de la position axiale de la contre-poupée par rapport à la poupée ; cette variante est motorisée, et comporte des moyens d'entraînement pour la mise en rotation de la broche de la poupée ;
- la figure 2 représente, de façon similaire à la figure 1, une variante simplifiée, non motorisée, dépourvue des moyens d'entraînement de la figure 1 ;

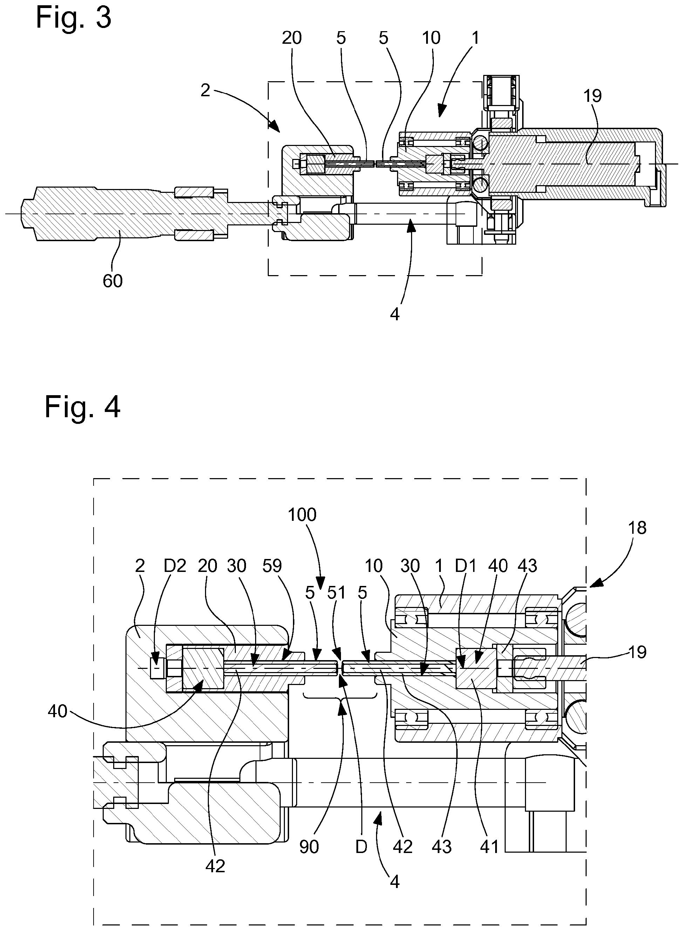

- la figure 3 représente, de façon schématisée, et en coupe par l'axe commun à la poupée et à la contre-poupée quand elles sont bien alignées, le dispositif de la figure 2, dans une position où la poupée et la contre-poupée sont dans une position rapprochée, avant leur écartement pour la présentation et l'insertion d'un composant mobile à contrôler ;
- la figure 4 est un détail de la partie centrale de la figure 3, et montre l'agencement de chaque centreur amovible interchangeable dans une variante particulière, non limitative, où une partie tubulaire extérieure comporte une surface externe cylindrique, qui coopère au plus juste avec un alésage que comporte la broche correspondante ; cette partie tubulaire entoure une âme polaire ferromagnétique ou magnétique, qui vient en appui, du côté opposé à l'espace d'entrefer, sur un aimant que porte la poupée ou la contre-poupée, ou bien qui vient au voisinage immédiat d'un tel aimant, cette âme polaire étant agencée pour canaliser les lignes de champ magnétique au voisinage de l'axe commun ; la partie tubulaire porte ici, non limitativement, un préhenseur du côté de l'espace d'entrefer ; le moteur entraîneur entraîne indirectement la broche de la poupée, au travers d'un montage cardan, ou d'un toc, ou de tout entraîneur similaire ;
- les figures 5 à 9 illustrent différentes combinaisons avantageuses de centreurs amovibles selon l'invention :
- la figure 5 comporte, du côté de l'entrefer, à la fois côté poupée et contre-poupée, une masse d'appui en rubis plat, derrière laquelle une masse polaire ferromagnétique ou magnétique assure un maintien du mobile en lévitation magnétique, parfaitement dans l'axe ;
- la figure 6, voisine de la figure 5, comporte, du côté de la poupée un rubis qui comporte un centrage en cône femelle, tandis que le micro-centreur de la contre-poupée est un rubis plat ;
- la figure 7 comporte, du côté de l'entrefer, à la fois côté poupée et contre-poupée, un préhenseur comportant un cône femelle d'appui avec une denture conique femelle, pour une préhension mécanique des extrémités d'un mobile ; ici aussi ces micro-centreurs sont représentés avec une masse polaire ferromagnétique ou magnétique qui peut aussi, seule, assurer un maintien du mobile en lévitation magnétique, parfaitement dans l'axe ;
- la figure 8 est l'inverse de la figure 7, les deux préhenseurs comportent ici une denture conique mâle ;
- la figure 9 montre une configuration adaptée à une forme particulière de mobile à mesurer, avec des diamètres différents côté poupée et contre-poupée ;
- la figure 10 est une vue de détail d'une denture conique femelle illustrée à la figure 7,
- la figure 11 est une vue de détail d'une denture conique femelle illustrée à la figure 8,
- la figure 12 est une double vue en coupe de deux variantes de centreurs non limitatives ; l'enveloppe tubulaire externe, de diamètre calibré et constant d'un centreur à l'autre, garantit l'interchangeabilité avec la poupée et la contre-poupée, dont les broches comportent le même alésage ;
- en partie haute de la figure12 est représenté un centreur avec un préhenseur en appui sur la masse polaire intérieure qui est elle-même en appui sur l'aimant de la poupée ou de la contre-poupée ;
- en partie basse de la figure 12, une masse d'appui non magnétique, typiquement en rubis ou similaire, précède une masse polaire intermédiaire, ferromagnétique ou magnétique, en appui sur l'âme polaire, et qui canalise le champ voire renforce le champ axial quand cette masse polaire intermédiaire est magnétique ;

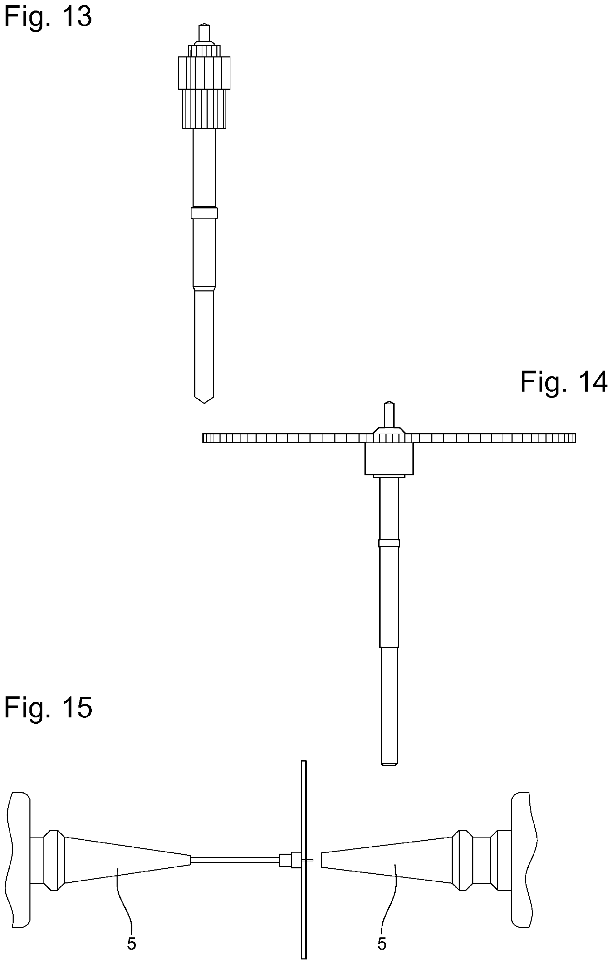

- la figure 13 représente, de façon schématisée et en élévation, un mobile sur lequel des contrôles dimensionnels sont à effectuer, de façon semi-statique, par exemple la longueur de la partie taillé, et les diamètres de différentes portées ; on voit que la proximité de la partie taillée avec une des extrémités rend sa préhension difficile avec des moyens classiques ;
- la figure 14 représente, de façon schématisée et en élévation, un autre mobile sur lequel des contrôles géométriques sont à effectuer, en l'occurrence des contrôles de battement, en dynamique, par exemple le battement simple du diamètre extérieur de la roue dentée par rapport aux deux portées d'extrémité de part et d'autre de la roue dentée, et le battement simple d'une des faces de la roue dentée par rapport à ces mêmes deux portées; là aussi la proximité de la grande roue avec une des extrémités rend sa préhension difficile avec des moyens classiques ;
- la figure 15 illustre la préhension du mobile de la figure 14 avec le dispositif selon l'invention, dont les centreurs sont dégagés sur leur partie avant, pour mieux guider le flux magnétique vers l'axe du mobile, pour un contrôle avec rotation de la poupée ;

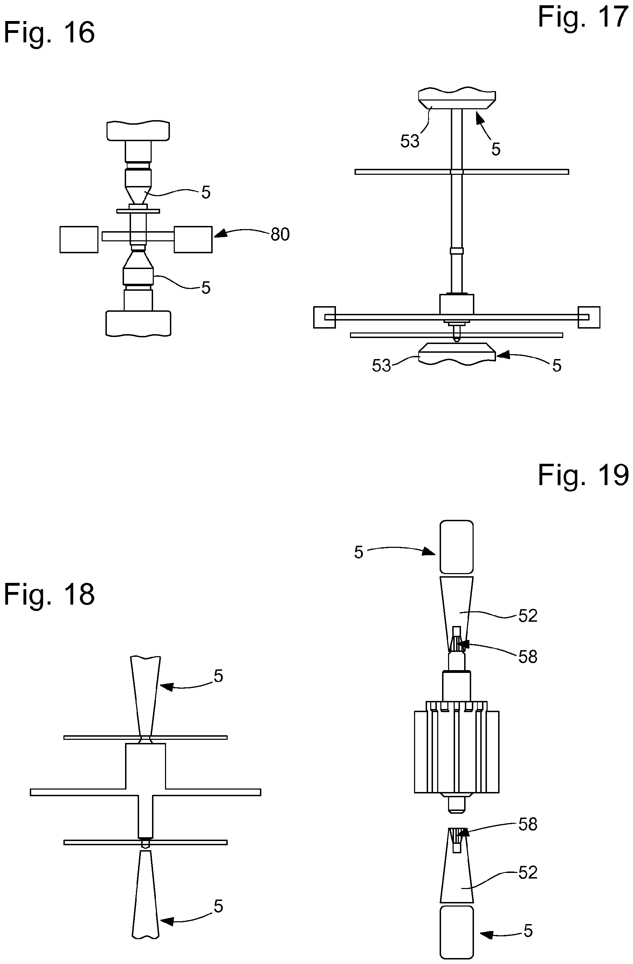

- la figure 16 illustre la préhension d'un autre mobile, avec maintien par des micro-pointes, face à des moyens de vision, notamment une caméra, que comporte le dispositif selon l'invention ; les rectangles à proximité du plus grand diamètre illustrent un exemple d'une zone de vision par une caméra, comme sur la figure 17 qui suit ; les rectangles étroits perpendiculaires à l'axe illustrent d'autres exemples de zones de surveillance optique, notamment pour vérifier l'absence de faux-rond, comme sur les figures 17 et 18 suivantes;
- la figure 17 illustre la préhension d'un autre mobile encore, entre un rubis de centrage opposé à un rubis plat, face à cette caméra, pour un contrôle avec rotation de la poupée ;
- la figure 18 illustre la préhension d'encore un autre mobile, avec maintien par deux dentures intérieures coniques, face à cette caméra, pour un contrôle avec rotation de la poupée ;
- la figure 19 illustre le cas particulièrement difficile de la préhension d'un pignon de moyenne, avec maintien par deux dentures intérieures coniques, face à cette caméra, pour un contrôle avec rotation de la poupée ;

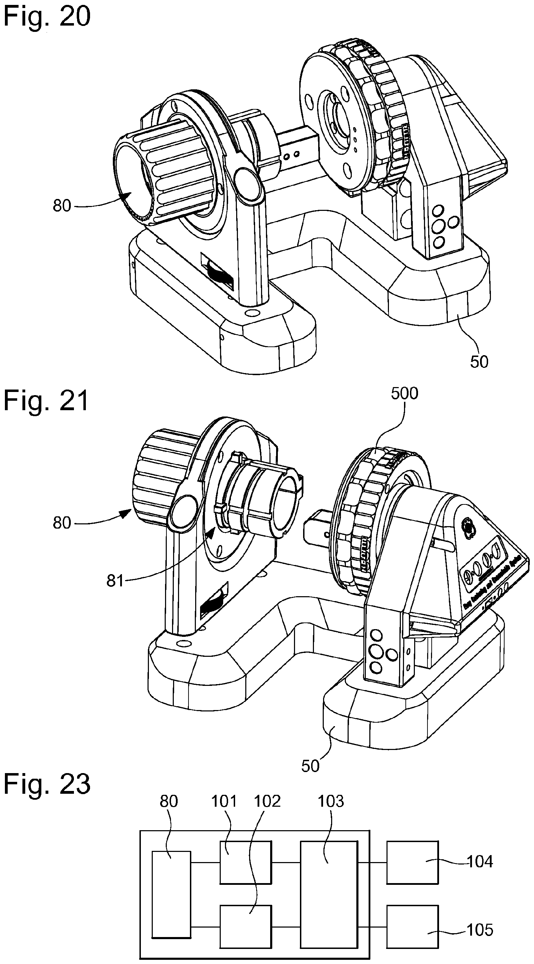

- la figure 20 représente, de façon schématisée, et en perspective, un dispositif selon l'invention, comportant un bâti porteur d'un plateau rotatif agencé pour recevoir le mécanisme de la figure 1 ou 2, ou pour constituer sa base support, et face auquel un autre élément de structure supporte une caméra et ses moyens de réglage ;
- la figure 21 est une autre vue en contre-champ du dispositif de la figure 20 ;

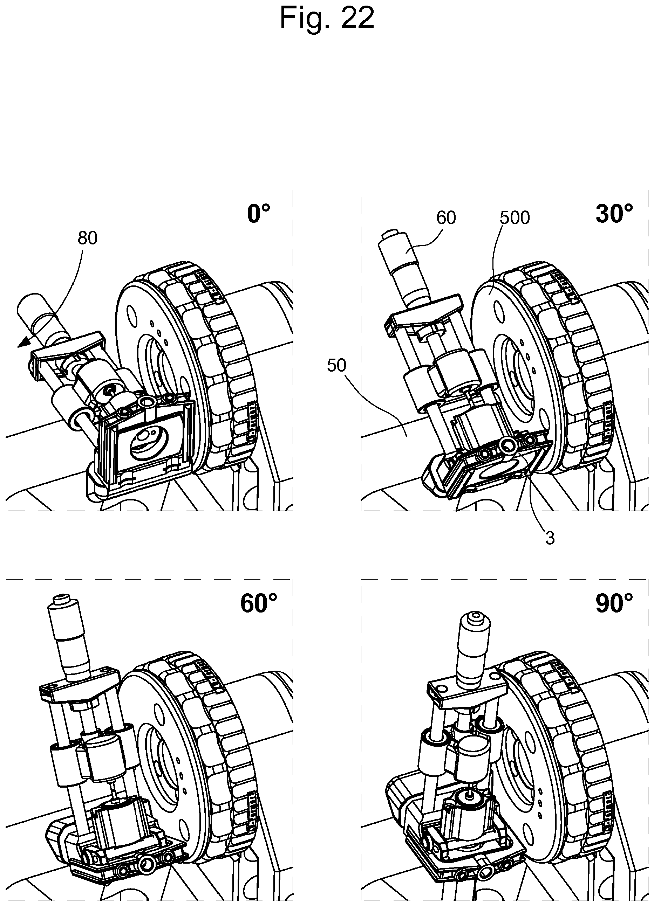

- la figure 22 représente, de façon schématisée, partielle, et en perspective, le dispositif complet, avec la semelle commune à la poupée et à la contre-poupée du mécanisme de la figure 1 qui est montée sur le plateau rotatif de la figure 20, dans quatre positions angulaires différentes, correspondant à quatre positions différentes du mobile à mesurer dans le champ de gravité ;
- la figure 23 est un schéma-blocs représentant un tel dispositif, avec des moyens d'analyse des images et/ou mesures faites par les moyens de vision par rapport à des valeurs de consigne, des moyens de calcul des écarts, et des moyens de liaison avec un système intégré de gestion de qualité produit et/ou de gestion de production, pour la correction des réglages des moyens de production en fonction des écarts.

### Description détaillée des modes de réalisation préférés

L'invention se propose de définir un mécanisme de contrôle facile à utiliser, interchangeable et adapté à un changement de production en rendant facile le contrôle d'un nouveau produit, tout en restant économique, tant au niveau de l'investissement matériel que de la durée du contrôle, et assurant la justesse requise, et la reproductibilité des mesures.

A cet effet, l'invention concerne un dispositif 100 de contrôle géométrique pour mobiles d'horlogerie. Tel que visible notamment sur les figures 1 et 2, ce dispositif 100 comporte une poupée 1 portant une première broche 10 folle ou motorisée et définissant un premier axe de rotation D1, et une contre-poupée 2 portant une deuxième broche 20 folle ou motorisée définissant un deuxième axe de rotation D2, agencées sur une semelle commune 3 par rapport à laquelle au moins la poupée 1 et/ou la contre-poupée 2 est mobile selon au moins un degré de liberté en translation le long de moyens de guidage d'alignement 4 selon une direction commune D parallèle au premier axe de rotation D1. Par exemple, tel qu'illustré, la poupée 1 est fixe, et la contre-poupée 2 est mobile le long de colonnes de guidage formant ces moyens de guidage d'alignement 4.

On utilise ici le qualificatif « premier » pour les organes relatifs à la poupée 1, et le qualificatif « deuxième » pour ceux relatifs à la contre-poupée 2 .

Le dispositif 100 comporte des moyens agencés pour assurer ou régler la coaxialité du deuxième axe de rotation D2 par rapport au premier axe de rotation D1. Dans le cas des figures, les moyens de guidage d'alignement 4 assurent cette coaxialité, et la position latérale de la contre-poupée 2 n'est pas réglable. Dans une variante non illustrée, la contre-poupée 2 peut être embarquée sur un chariot transversal, selon une direction orthogonale au premier axe de rotation D1, et comporter des moyens micrométriques d'ajustement latéral.

Selon l'invention, le dispositif 100 comporte une pluralité de centreurs amovibles 5 interchangeables, et au moins la première broche 10 et/ou la deuxième broche 20 comporte des moyens de réception 30, qui sont agencés pour loger coaxialement un tel centreur amovible 5. Et au moins la poupée 1 et/ou la contre-poupée 2 comporte des moyens de traction 40, qui sont agencés pour exercer sans contact une traction d'un tel centreur amovible 5 axialement selon la direction commune D, à l'opposé d'un espace 90 d'entrefer séparant la poupée 1 et la contre-poupée 2. Plus particulièrement, et tel qu'illustré sur les figures, à la fois la première broche 10 et la deuxième broche 20 comportent de tels moyens de réception 30, et à la fois la poupée 1 et la contre-poupée 2 comportent des moyens de traction 40.

Dans une variante simple, précise, et économique, les moyens de réception 30 comportent des alésages, et peuvent comporter une surface d'appui de butée axiale.

L'invention est décrite ici dans sa version la plus simple avec une seule poupée 1 et une seule contre-poupée 2, mais on comprend que le dispositif peut comporter davantage de contre-poupées agencées pour coopérer avec la même poupée 1. Toutefois, la conception de l'invention avec de tels centreurs amovibles 5 interchangeables est tellement simple et facile d'emploi que le changement d'équipement du dispositif de contrôle 100 est très rapide, et la configuration illustrée se révèle suffisante.

Plus particulièrement, les moyens de traction 40 comportent au moins un pôle magnétique 41, notamment au moins un aimant, qui est agencé pour attirer une âme polaire 42 ferromagnétique ou magnétique que comporte chaque centreur amovible 5, vers une position arrière de butée sur une surface d'appui de butée, laquelle peut être une surface du pôle magnétique 41, ou encore d'une cloison à travers laquelle peut circuler, de façon sensiblement axiale, le champ magnétique émis par ce pôle magnétique 41. L'invention est illustrée sur les figures avec des aimants permanents, un tel pôle magnétique 41 peut naturellement aussi comporter au moins un électro-aimant.

Les figures 3 et 4 montrent l'agencement axial de ces aimants 41, qui peuvent être renforcés par des aimants secondaires 43, tel que visible sur la poupée 1, pour renforcer le champ magnétique.

L'important est de canaliser le champ magnétique au voisinage de l'axe commun D. A cet effet, les centreurs amovibles 5 sont agencés pour au moins guider le flux magnétique selon cette direction, voire même le rapprocher de l'axe géométrique D, tel que visible sur la figure 15, voire encore renforcer le champ par la mise en série d'une masse polaire 52 ferromagnétique ou magnétique, comme on le verra plus loin.

Ainsi, de façon particulière, au moins un centreur amovible 5 comporte des moyens de concentration d'un champ magnétique axial, auquel il est soumis à une première extrémité axiale opposée à l'espace 90 et/ou que génère cet au moins un centreur amovible 5, autour de la direction commune D, à une deuxième extrémité tournée vers l'espace 90. La figure 15 illustre ainsi la préhension d'un mobile, avec des centreurs 5 qui sont dégagés sur leur partie avant, pour mieux guider le flux magnétique vers l'axe D du mobile, pour un contrôle avec rotation de la poupée 1. Le document EP28887007B1 au nom de MONTRES BREGUET SA décrit un posage avec un tel concentrateur de flux.

Naturellement, si le dispositif 100 selon l'invention est avantageusement conçu pour la préhension de composants ferromagnétiques ou similaires, il est aussi capable de traiter le cas de matériaux amagnétiques. Aussi, plus particulièrement, au moins un centreur amovible 5 comporte, du côté de l'espace 90, un préhenseur 51, qui est agencé pour coopérer par contact mécanique avec une extrémité axiale d'un mobile d'horlogerie. Ce contact mécanique peut se substituer à l'interaction magnétique ou venir en complément de celle-ci. Plus particulièrement, un tel préhenseur 51 est agencé pour entraîner en rotation une extrémité axiale d'un mobile d'horlogerie, quand le centreur amovible 5 est soumis à une rotation qui lui est imprimée par la poupée 1 ou la contre-poupée 2.

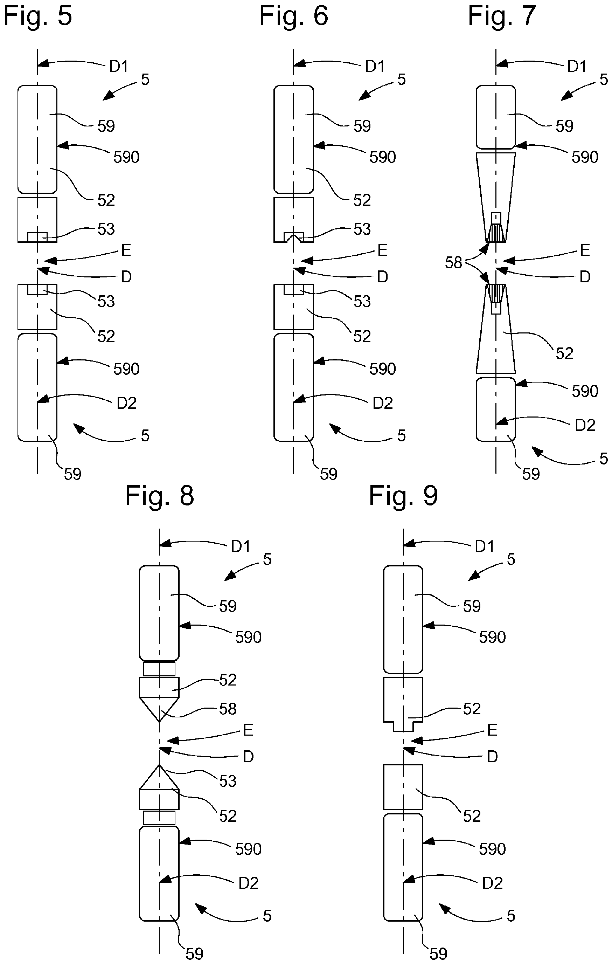

Selon l'invention, tel que visible sur les figures 7, 8, 10, 12, 19, le préhenseur 51 comporte une denture conique d'appui 58, mâle ou femelle, agencée pour coopérer avec une extrémité axiale d'un mobile d'horlogerie pour l'entraînement en rotation de ce mobile. Ainsi, lorsque le mobile à contrôler est amagnétique, cette denture conique 58 assure la tenue, le centrage, et l'entraînement de ce mobile.

Le préhenseur 51 peut être réalisé en différents matériaux, notamment et non limitativement acier trempable, acier inoxydable, matériau fritté tel que carbure de tungstène, ou autre.

Pour certaines applications, le préhenseur 51 peut aussi comporter un simple cône lisse, mâle ou femelle.

Dans une réalisation particulière, au moins un centreur amovible 5 comporte, du côté de l'espace 90, une masse polaire 52 ferromagnétique ou magnétique, qui est agencée pour coopérer en attraction ou en répulsion magnétique avec une extrémité axiale magnétique ou ferromagnétique d'un mobile d'horlogerie. Plus particulièrement, cette masse polaire 52 est agencée pour exercer ou pour transmettre à une extrémité axiale magnétique ou ferromagnétique d'un mobile d'horlogerie un couple d'entraînement en rotation.

Dans une autre réalisation particulière, au moins un centreur amovible 5 qui comporte une telle masse polaire 52 ferromagnétique ou magnétique comporte encore, du côté de l'espace 90, une masse d'appui 53, qui est agencée pour limiter la course axiale d'une extrémité axiale d'un mobile d'horlogerie. La figure 5 comporte, du côté de l'entrefer 90, à la fois côté poupée 1 et contre-poupée 2, une telle masse d'appui 53 en rubis plat, derrière laquelle une masse polaire 52 ferromagnétique ou magnétique assure un maintien du mobile en lévitation magnétique, parfaitement dans l'axe. Le pivotement magnétique d'un mobile est exposé dans le document EP2450758B1 au nom de MONTRES BREGUET SA. Plus particulièrement la masse d'appui 53 est en rubis ou similaire.

Dans une réalisation particulière non illustrée, la contre-poupée 2 comporte un moyen de rappel élastique 21, qui est agencé pour repousser vers l'espace 90 la deuxième broche 20, ou un centreur amovible 5 que porte la deuxième broche 20.

Plus particulièrement, au moins la poupée 1 comporte des premiers moyens de motorisation 19, qui sont agencés pour entraîner en rotation la première broche 10 autour du premier axe de rotation D1, et comporte, entre les premiers moyens de motorisation 19 et la première broche 10, des premiers moyens d'accouplement 18 de type cardan ou similaire, pour assurer une rotation sans contrainte de la première broche 10, et pour s'affranchir de tout défaut d'alignement du moteur. Tel que visible sur la figure 4, l'entraînement de la première broche 10 de la poupée 1 se fait par l'intermédiaire de son aimant 41, l'entraînement est donc indirect, avec l'avantage que l'erreur de battement ou d'alignement du moteur n'influence pas la rotation de la broche.

Dans une réalisation particulière non illustrée, au moins la contre-poupée 2 comporte des deuxièmes moyens de motorisation 17, qui sont agencés pour entraîner en rotation la deuxième broche 20 autour du deuxième axe de rotation D2, et comporte, entre les deuxièmes moyens de motorisation 17 et la deuxième broche 20, des deuxièmes moyens d'accouplement 16 de type cardan ou similaire pour assurer une rotation sans contrainte de la deuxième broche 20.

Plus particulièrement, tel que visible sur les figures 1, 2, 3, et 22, le dispositif 100 comporte des moyens de réglage et/ou de mesure micrométrique 60 de la position relative de la contre-poupée 2 par rapport à la poupée 1 selon la direction commune D.

Dans une réalisation particulière non illustrée, le dispositif 100 comporte des moyens de réglage latéral 70 de la position du deuxième axe de rotation D2 par rapport au premier axe de rotation D1.

Plus particulièrement, les corps de la poupée 1, de la première broche 10, de la contre-poupée 2 et de la deuxième broche 20 sont en matériau amagnétique, tel que laiton, notamment laiton rhodié, ou similaire, afin de ne pas diffuser le flux magnétique en éloignement de la direction commune D.

Dans une réalisation particulière non illustrée, la poupée 1 et/ou la contre-poupée 2 comporte au moins une jauge de contrainte pour la mesure de l'effort axial selon la direction commune D, ou pour la comparaison à une valeur de consigne.

Plus particulièrement, tel que visible sur les figures 20 et 21, le dispositif 100 comporte un bâti principal 50, qui est agencé pour porter directement ou indirectement la semelle commune 3, et pour porter des moyens de vision 80 agencés pour observer et/ou mesurer un mobile d'horlogerie maintenu par deux centreurs amovibles 5 interchangeables, dans l'espace 90, et le dispositif 100 comporte des moyens de réglage en position 81 des moyens de vision 80, tels que pas de vis ou similaire.

De façon avantageuse, le bâti principal 50 est agencé pour porter indirectement la semelle commune 3 au travers d'au moins un plateau rotatif 500, motorisé ou non, agencé pour présenter un mobile d'horlogerie dans différentes positions dans le champ de gravité.

Plus particulièrement, le dispositif 100 comporte des moyens d'analyse 101 des images et/ou mesures faites par les moyens de vision 80 par rapport à des valeurs de consigne, des moyens de calcul des écarts 102, et des moyens de liaison 103 avec un système intégré de gestion de qualité produit 104 et/ou de gestion de production 105, pour la correction des réglages des moyens de production en fonction des écarts.

En somme, les centreurs amovibles 5 selon l'invention, qui sont réellement des micro-centreurs en raison de leurs faibles dimensions d'extrémité au niveau du mobile à contrôler, sont simples, peu coûteux, facilement interchangeables, bien adaptés aux différents besoins, et utilisables pour divers moyens de mesure, et notamment mais non limitativement optiques. Les aimants que comportent la poupée et la contre-poupée assurent deux fonctions :
- attirer magnétiquement chaque micro-centreur dans la broche respective, et ;
- induire un champ magnétique dans les micro-centreurs, qui concentrent par ailleurs le flux magnétique au voisinage immédiat de l'axe du mobile à contrôler.

Enfin, le dispositif complet, tel qu'illustré aux figures 20 et 21, est extrêmement compact (environ 200 millimètres au cube) et est ainsi très facile à intégrer dans une ligne de production. L'accessibilité pour un manipulateur robotisé est de surcroît excellente.

## Revendications

1. Dispositif (100) de contrôle géométrique pour mobiles d'horlogerie, comportant une poupée (1) portant une première broche (10) folle ou motorisée et définissant un premier axe de rotation (D1) et une contre-poupée (2) portant une deuxième broche (20) folle ou motorisée définissant un deuxième axe de rotation (D2), agencées sur une semelle commune (3) par rapport à laquelle au moins ladite poupée (1) et/ou ladite contre-poupée (2) est mobile selon au moins un degré de liberté en translation le long de moyens de guidage d'alignement (4) selon une direction commune (D) parallèle audit premier axe de rotation (D1), et des moyens agencés pour assurer ou régler la coaxialité dudit deuxième axe de rotation (D2) par rapport audit premier axe de rotation (D1), ledit dispositif (100) comportant une pluralité de centreurs amovibles (5) interchangeables, ladite première broche (10) de ladite poupée (1) et ladite deuxième broche (20) de ladite contre-poupée (2) comportant chacune un alésage constituant des moyens de réception (30) agencés pour loger coaxialement un dit centreur amovible (5), et où au moins ladite poupée (1) et/ou ladite contre-poupée (2) comporte des moyens de traction (40) agencés pour exercer sans contact une traction d'un dit centreur amovible (5) axialement selon ladite direction commune (D), à l'opposé d'un espace (90) séparant ladite poupée (1) et ladite contre-poupée (2), **caractérisé en ce que** lesdits moyens de traction (40) comportent au moins un pôle magnétique (41) agencé pour attirer une âme polaire (42) ferromagnétique ou magnétique que comporte chaque dit centreur amovible (5), et **en ce qu'**au moins un dit centreur amovible (5) comporte, du côté dudit espace (90), un préhenseur (51) agencé pour coopérer par contact mécanique avec une extrémité axiale d'un mobile d'horlogerie, ledit préhenseur (51) étant agencé pour entraîner en rotation une extrémité axiale d'un mobile d'horlogerie quand ledit centreur amovible (5) est soumis à une rotation qui lui est imprimée par ladite poupée (1) ou ladite contre-poupée (2), et où ledit préhenseur (51) comporte une denture conique d'appui (58), mâle ou femelle, agencée pour coopérer avec une extrémité axiale d'un mobile d'horlogerie pour l'entraînement en rotation dudit mobile.

2. Dispositif (100) selon la revendication 1, **caractérisé en ce qu'**au moins un dit centreur amovible (5) comporte des moyens de concentration d'un champ magnétique axial, auquel il est soumis à une première extrémité axiale opposée audit espace (90) et/ou que génère ledit au moins un dit centreur amovible (5), autour de ladite direction commune (D), à une deuxième extrémité tournée vers ledit espace (90).

3. Dispositif (100) selon la revendication 1 ou 2, **caractérisé en ce qu'**au moins un dit centreur amovible (5) comporte, du côté dudit espace (90), une masse polaire (52) ferromagnétique ou magnétique agencée pour coopérer en attraction ou en répulsion magnétique avec une extrémité axiale magnétique ou ferromagnétique d'un mobile d'horlogerie.

4. Dispositif (100) selon la revendication 3, **caractérisé en ce que** ladite masse polaire (52) est agencée pour transmettre à une extrémité axiale magnétique ou ferromagnétique d'un mobile d'horlogerie un couple d'entraînement en rotation.

5. Dispositif (100) selon la revendication 3 ou 4, **caractérisé en ce que** ledit au moins un dit centreur amovible (5) qui comporte dite une masse polaire (52) ferromagnétique ou magnétique comporte, du côté dudit espace (90), une masse d'appui (53) qui est agencée pour limiter la course axiale d'une extrémité axiale d'un mobile d'horlogerie.

6. Dispositif (100) selon la revendication 5, **caractérisé en ce que** ladite masse d'appui (53) est en rubis.

7. Dispositif (100) selon l'une des revendications 1 à 6, **caractérisé en ce que** ladite contre-poupée (2) comporte un moyen de rappel élastique (21) agencé pour repousser vers ledit espace (90) ladite deuxième broche (20) ou un dit centreur amovible (5) que porte ladite deuxième broche (20).

8. Dispositif (100) selon l'une des revendications 1 à 7, **caractérisé en ce que** au moins ladite poupée (1) comporte des premiers moyens de motorisation (19) agencés pour entraîner en rotation ladite première broche (10) autour dudit premier axe de rotation (D1), et comporte entre lesdits premiers moyens de motorisation (19) et ladite première broche (10) des premiers moyens d'accouplement (18) de type cardan pour assurer une rotation sans contrainte de ladite première broche (10).

9. Dispositif (100) selon l'une des revendications 1 à 8, **caractérisé en ce que** au moins ladite contre-poupée (2) comporte des deuxièmes moyens de motorisation (17) agencés pour entraîner en rotation ladite deuxième broche (20) autour dudit deuxième axe de rotation (D2), et comporte entre lesdits deuxièmes moyens de motorisation (17) et ladite deuxième broche (20) des deuxièmes moyens d'accouplement (16) de type cardan pour assurer une rotation sans contrainte de ladite deuxième broche (20).

10. Dispositif (100) selon l'une des revendications 1 à 9, **caractérisé en ce que** ledit dispositif (100) comporte des moyens de réglage et/ou de mesure micrométrique (60) de la position relative de ladite contre-poupée (2) par rapport à ladite poupée (1) selon ladite direction commune (D).

11. Dispositif (100) selon l'une des revendications 1 à 10, **caractérisé en ce que** ledit dispositif (100) comporte des moyens de réglage latéral (70) de la position dudit deuxième axe de rotation (D2) par rapport audit premier axe de rotation (D1).

12. Dispositif (100) selon l'une des revendications 1 à 11, **caractérisé en ce que** les corps de ladite poupée (1), de ladite première broche (10), de ladite contre-poupée (2) et de ladite deuxième broche (20) sont en matériau amagnétique afin de ne pas diffuser le flux magnétique en éloignement de ladite direction commune (D).

13. Dispositif (100) selon l'une des revendications 1 à 12, **caractérisé en ce que** ladite poupée (1) et/ou ladite contre-poupée (2) comporte au moins une jauge de contrainte pour la mesure de l'effort axial selon ladite direction commune (D), ou la comparaison à une valeur de consigne.

14. Dispositif (100) selon l'une des revendications 1 à 13, **caractérisé en ce que** ledit dispositif (100) comporte un bâti principal (50) agencé pour porter directement ou indirectement ladite semelle commune (3), et pour porter des moyens de vision (80) agencés pour observer et/ou mesurer un mobile d'horlogerie maintenu par deux dits centreurs amovibles (5) interchangeables, dans ledit espace (90), et comportant des moyens de réglage en position (81) desdits moyens de vision (80).

15. Dispositif (100) selon la revendication 14, **caractérisé en ce que** ledit bâti principal (50) est agencé pour porter indirectement ladite semelle commune (3) au travers d'au moins un plateau rotatif (500), motorisé ou non, agencé pour présenter un dit mobile d'horlogerie dans différentes positions dans le champ de gravité.

16. Dispositif (100) selon la revendication 14 ou 15, **caractérisé en ce que** ledit dispositif (100) comporte des moyens d'analyse (101) des images et/ou mesures faites par lesdits moyens de vision (80) par rapport à des valeurs de consigne, des moyens de calcul des écarts (102), et des moyens de liaison (103) avec un système intégré de gestion de qualité produit (104) et/ou de gestion de production (105), pour la correction des réglages des moyens de production en fonction desdits écarts.

## Patentansprüche

1. Vorrichtung (100) zur geometrischen Kontrolle von beweglichen Organen der Uhr mit einem Spindelstock (1), der eine erste lose laufende oder motorisch betriebene Spindel trägt und eine erste Drehachse (D1) definiert, und mit einem Reitstock (2), der eine zweite lose laufende oder motorisch betriebene Spindel (20) trägt und eine zweite Drehachse (D2) definiert, die auf einer gemeinsamen Sohle (3) angeordnet sind, in Bezug auf die mindestens der Spindelstock (1) und/oder der Reitstock (2) gemäß mindestens einem translatorischen Freiheitsgrad entlang von Ausrichtungsführungsmitteln (4) in einer gemeinsamem Richtung (D) parallel zur ersten Drehachse (D1) beweglich ist, und Mittel, die die Koaxialität der zweiten Drehachse (D2) in Bezug auf die erste Drehachse (D1) sicherstellen oder einstellen, wobei die Vorrichtung (100) mehrere untereinander austauschbare, entfernbare Zentriervorrichtungen (5) umfasst, wobei die erste Spindel (10) des Spindelstocks (1) und die zweite Spindel (20) des Reitstocks (2) jeweils eine Bohrung aufweisen, die Aufnahmemittel (30) bildet, die eine entfernbare Zentriervorrichtung (5) koaxial aufnehmen, und wobei zumindest der Spindelstock (1) und/oder der Reitstock (2) Zugmittel (40) enthalten, die auf eine entfernbare Zentriervorrichtung (5) längs der gemeinsamen Richtung (D) gegenüber einem Zwischenraum (90), der den Spindelstock (1) und den Reitstock (2) trennt, berührungslos einen axialen Zug ausüben, **dadurch gekennzeichnet, dass** die Zugmittel (40) mindestens einen magnetischen Pol (41) aufweisen, der dafür ausgelegt ist, eine ferromagnetische oder magnetische Polachse (42), die jede der entfernbaren Zentriervorrichtungen (5) aufweist, anzuziehen, und dass mindestens eine der entfernbaren Zentriervorrichtungen (5) auf der Seite des Zwischenraums (90) einen Greifer (51) aufweist, der so angeordnet ist, durch mechanischen Kontakt mit einem axialen Ende eines beweglichen Organs einer Uhr zusammenzuwirken, wobei der Greifer (51) dafür ausgelegt ist, ein axiales Ende eines beweglichen Organs der Uhr in Drehung zu versetzen, wenn die entfernbare Zentriervorrichtung (5) einer Drehung unterworfen ist, die ihr durch den Spindelstock (1) oder den Reitstock (2) aufgezwungen wird, und wobei der Greifer (51) eine konische Stützverzahnung (58), männlich oder weiblich, aufweist, die dafür ausgelegt ist, mit einem axialen Ende eines beweglichen Organs der Uhr zusammenzuwirken, um das bewegliche Organ in Drehung zu versetzen.

2. Vorrichtung (100) nach Anspruch 1, **dadurch gekennzeichnet, dass** mindestens eine entfernbare Zentriervorrichtung (5) Mittel zum Konzentrieren eines axialen Magnetfeldes umfasst, dem diese an einem ersten axialen Ende gegenüberliegend dem Zwischenraum (90) ausgesetzt ist und/oder das von mindestens einer entfernbaren Zentriervorrichtung (5) um die gemeinsame Richtung (D) an einem dem Zwischenraum (90) zugewandten zweiten Ende erzeugt wird.

3. Vorrichtung (100) nach Anspruch 1 oder 2, **dadurch gekennzeichnet, dass** mindestens eine der entfernbaren Zentriervorrichtungen (5) auf der Seite des Zwischenraums (90) eine ferromagnetische oder magnetische Polmasse (52) aufweist, die dafür ausgelegt ist, mit einem magnetischen oder ferromagnetischen axialen Ende eines beweglichen Organs der Uhr in magnetischer Anziehung oder Abstoßung zusammenzuwirken.

4. Vorrichtung (100) nach Anspruch 3, **dadurch gekennzeichnet, dass** die Polmasse (52) so angeordnet ist, dass an ein magnetisches oder ferromagnetisches axiales Ende eines beweglichen Organs der Uhr ein Drehmoment für den Drehantrieb übertragen wird.

5. Vorrichtung (100) nach Anspruch 3 oder 4, **dadurch gekennzeichnet, dass** die mindestens eine entfernbare Zentriervorrichtung (5), die eine ferromagnetische oder magnetische Polmasse (52) umfasst, auf der Seite des Zwischenraums (90) eine Stützmasse (53) aufweist, die dafür ausgelegt ist, den axialen W eines axialen Endes eines beweglichen Organs der Uhr zu begrenzen.

6. Vorrichtung (100) nach Anspruch 5, **dadurch gekennzeichnet, dass** die Stützmasse (53) aus Rubin ist.

7. Vorrichtung (100) nach einem der Ansprüche 1 bis 6, **dadurch gekennzeichnet, dass** der Reitstock (2) ein elastisches Rückstellmittel (21) aufweist, das dafür ausgelegt ist, die zweite Spindel (20) oder eine entfernbare Zentriervorrichtung (5), die die zweite Spindel (20) trägt, in Richtung des Zwischenraums (90) zu drücken.

8. Vorrichtung (100) nach einem der Ansprüche 1 bis 7, **dadurch gekennzeichnet, dass** mindestens der Spindelstock (1) erste Motorisierungsmittel (19) aufweist, die dafür ausgelegt sind, die erste Spindel (10) um die erste Drehachse (D1) zu drehen, und zwischen den ersten Motorisierungsmittel (19) und der ersten Spindel (10) erste kardanische Kupplungsmittel (18) aufweist, um eine unbelastete Drehung der ersten Spindel (10) zu gewährleisten.

9. Vorrichtung (100) nach einem der Ansprüche 1 bis 8, **dadurch gekennzeichnet, dass** mindestens der Reitstock (2) zweite Motorisierungsmittel (17) aufweist, die dafür ausgelegt sind, die zweite Spindel (20) um die zweite Drehachse (D2) in Drehung zu versetzen, und zwischen den zweiten Motorisierungsmitteln (17) und der zweiten Spindel (20) zweite kardanische Kupplungsmittel (16) aufweist, um eine unbelastete Drehung der zweiten Spindel (20) zu gewährleisten.

10. Vorrichtung (100) nach einem der Ansprüche 1 bis 9, **dadurch gekennzeichnet, dass** die Vorrichtung (100) Mittel zur mikrometrischen Einstellung und/oder Messung (60) der relativen Position des Reitstocks (2) in Bezug auf den Spindelstock (1) in der gemeinsamen Richtung (D) umfasst.

11. Vorrichtung (100) nach einem der Ansprüche 1 bis 10, **dadurch gekennzeichnet, dass** die Vorrichtung (100) Mittel (70) zur seitlichen Einstellung der Position der zweiten Drehachse (D2) in Bezug auf die erste Drehachse (D1) umfasst.

12. Vorrichtung (100) nach einem der Ansprüche 1 bis 11, **dadurch gekennzeichnet, dass** die Körper des Spindelstocks (1) der ersten Spindel (10), des Reitstocks (2) und der zweiten Spindel (20) aus einem nicht magnetischen Material sind, um den magnetischen Fluss mit zunehmender Entfernung von der gemeinsamen Richtung (D) nicht zu streuen.

13. Vorrichtung (100) nach einem der Ansprüche 1 bis 12, **dadurch gekennzeichnet, dass** der Spindelstock (1) und/oder der Reitstock (2) mindestens einen Dehnungsmessstreifen aufweisen zum Messen der Axialkraft in der gemeinsamen Richtung (D) oder zum Vergleichen mit einem Sollwert.

14. Vorrichtung (100) nach einem der Ansprüche 1 bis 13, **dadurch gekennzeichnet, dass** die Vorrichtung (100) ein Hauptgestell (50) aufweist, das dafür ausgelegt ist, die gemeinsame Sohle (3) direkt oder indirekt zu tragen und Sichtmittel (80) zu tragen, die dafür ausgelegt sind, ein bewegliches Organ der Uhr, das von zwei austauschbaren entfernbaren Zentriervorrichtungen (5) in dem Zwischenraum (90) gehalten wird, zu beobachten und/oder zu messen, und Mittel (81) zum Einstellen der Position der Sichtmittel (80) aufweisen.

15. Vorrichtung (100) nach Anspruch 14, **dadurch gekennzeichnet, dass** das Hauptgestell (50) dafür ausgelegt ist, die gemeinsame Sohle (3) indirekt über mindestens eine Drehscheibe (500), die motorisiert oder nicht motorisiert ist und dafür ausgelegt ist, ein bewegliches Organ der Uhr in verschiedenen Positionen im Gravitationsfeld zu präsentieren, zu tragen.

16. Vorrichtung (100) nach Anspruch 14 oder 15, **dadurch gekennzeichnet, dass** die Vorrichtung (100) Mittel (101) zur Analyse von Bildern und/oder Messungen, die von den Sichtmitteln (80) gemacht werden in Bezug auf Sollwerte, Mittel (102) zur Berechnung von Abweichungen und Mittel (103) zur Verbindung mit einem integrierten System zum Produktqualitätsmanagement (104) und/oder zur Steuerung der Produktion (105) umfasst, um die Einstellungen der Produktionsmitteln in Abhängigkeit von den Abweichungen zu korrigieren.

## Claims

1. Geometric inspection device (100) for horological mobile components, including a headstock (1) bearing a first loose or motorized spindle (10) and defining a first axis of rotation (D1) and a tailstock (2) bearing a second loose or motorized spindle (20) defining a second axis of rotation (D2), arranged on a common sole (3) relative to which at least said headstock (1) and/or said tailstock (2) can move according to at least one degree of freedom in translation along alignment guiding means (4) along a common direction (D) parallel with said first axis of rotation (D1), and means arranged to ensure or set the coaxiality of said second axis of rotation (D2) relative to said first axis of rotation (D1),
said device (100) comprising a plurality of removable and interchangeable centering devices (5), said first spindle (10) of said headstock (1) and said second spindle (20) of said tailstock (2) each including a hole constituting receiving means (30) arranged to coaxially house a said removable centering device (5), and wherein at least said headstock (1) and/or said tailstock (2) comprises pulling means (40) arranged to pull without contact a said removable centering device (5) axially along said common direction (D), opposite a space (90) separating said headstock (1) and said tailstock (2), **characterized in that** said pulling means (40) include at least one magnetic pole (41) arranged to attract a ferromagnetic or magnetic polar core (42) included in each said removable centering device (5), and **in that** at least one said removable centering device (5) comprises, on the side of said space (90), a gripper (51) arranged to cooperate by mechanical contact with an axial end of a horological mobile component, said gripper (51) being arranged to rotate an axial end of a horological mobile component, when said removable centering device (5) is subjected to a rotation which is imparted thereon by said headstock (1) or said tailstock (2), and wherein said gripper (51) includes a conical bearing toothing (58), male or female, arranged to cooperate with an axial end of a horological mobile component for rotating said mobile component.

2. Device (100) according to claim 1, **characterized in that** at least one said removable centering device (5) comprises means for concentrating an axial magnetic field, to which it is subjected at a first axial end opposite said space (90) and/or generated by said at least one said removable centering device (5), about said common direction D, at a second end oriented toward said space (90).

3. Device (100) according to claim 1 or 2, **characterized in that** at least one said removable centering device (5) comprises, on the side of said space (90), a ferromagnetic or magnetic polar mass (52) arranged to cooperate in magnetic attraction or repulsion with a magnetic or ferromagnetic axial end of a horological mobile component.

4. Device (100) according to claim 3, **characterized in that** said polar mass (52) is arranged to transmit to a magnetic or ferromagnetic axial end of a horological mobile component a rotational drive torque.

5. Device (100) according to claim 3 or 4, **characterized in that** said at least one said removable centering device (5) that comprises said one ferromagnetic or magnetic polar mass (52) includes, on the side of said space (90), a bearing mass (53), which is arranged to limit the axial travel of an axial end of a horological mobile component.

6. Device (100) according to claim 5, **characterized in that** said bearing mass (53) is made of ruby.

7. Device (100) according to one of claims 1 to 6, **characterized in that** said tailstock (2) comprises elastic return means (21) arranged to push said second spindle (20) or a said removable centering device (5) borne by said second spindle (20) toward said space (90).

8. Device (100) according to one of claims 1 to 7, **characterized in that** at least said headstock (1) comprises first motorization means (19) arranged to rotate said first spindle (10) around said first axis of rotation (D1), and comprises between said first motorization means (19) and said first spindle (10), first coupling means (18) of cardan joint type to ensure unrestricted rotation of said first spindle (10).

9. Device (100) according to one of claims 1 to 8, **characterized in that** at least said tailstock (2) comprises second motorization means (17) arranged to rotate said second spindle (20) around said second axis of rotation (D2), and comprises between said second motorization means (17) and said second spindle (20), second coupling means (16) of cardan joint type to ensure unrestricted rotation of said second spindle (20).

10. Device (100) according to one of claims 1 to 9, **characterized in that** said device (100) comprises micrometric setting and/or measurement means (60) of the relative position of said tailstock (2) relative to said headstock (1) along said common direction (D).

11. Device (100) according to one of claims 1 to 10, **characterized in that** said device (100) comprises lateral setting means (70) of the position of said second axis of rotation (D2) relative to said first axis of rotation (D1).

12. Device (100) according to one of claims 1 to 11, **characterized in that** the bodies of said headstock (1), said first spindle (10), said tailstock (2) and said second spindle (20), are made of non-magnetic material so as not to scatter the magnetic flux away from said common direction (D).

13. Device (100) according to one of claims 1 to 12, **characterized in that** said headstock (1) and/or said tailstock (2) comprises at least one stress gauge for measuring the axial force along said common direction (D), and/or for comparison to a set-point value.

14. Device (100) according to one of claims 1 to 13, **characterized in that** said device (100) comprises a main frame (50) arranged to directly or indirectly bear said common sole (3), and to bear viewing means (80) arranged to observe and/or measure a horological mobile component held by two said interchangeable, removable centering devices (5), in said space (90), and comprising positional setting means (81) of said viewing means (80).

15. Device (100) according to claim 14, **characterized in that** said main frame (50) is arranged to indirectly bear said common sole (3) via at least one motorized or non-motorized rotary plate (500) arranged to present a said horological mobile component in different positions in the gravitational field.

16. Device (100) according to claim 14 or 15, **characterized in that** said device (100) comprises means (101) for analyzing images and/measurements made by said viewing means (80) with respect to set-point values, means for computing deviations (102), and linking means (103) with an integrated product quality management (104) and/or production management (105) system, for correcting the settings of the production means according to said deviations.
